# FASCICULE DE BREVET EUROPEEN

(11) **EP 0 448 457 B1**
(45) Date de publication et mention de la délivrance du brevet: **18.11.1993**
(21) Numéro de dépôt: 91400731.5
(22) Date de dépôt: 19.03.1991
(51) Int. Cl.: F16H 57/02, F16H 57/04, B60K 17/08

(54) **Dispositif de deux vitesses additionnelles synchronisées sur une boîte de vitesses mécanique**
Vorrichtung aus zwei synchronisierten, zusätzlichen Gängen für ein Stufengetriebe
Device consisting of two synchronised, additional gear steps for a mechanical gear box

(30) Priorité: 23.03.1990 FR 9003712
(43) Date de publication de la demande: 25.09.1991
(73) Titulaire: REGIE NATIONALE DES USINES RENAULT S.A., 92109 Boulogne Billancourt (FR)
(72) Inventeur: Andrieux, Michel, F-91630 Marolles en Hurepoix (FR); Rivoiron, Sylvain, F-95160 Montmorency (FR)
(74) Mandataire: Ernst-Schonberg, Michel

(56) Documents cités:
- EP-A- 0 057 113
- EP-A- 0 058 968
- DE-C- 2 707 699
- DE-U- 8 108 351
- FR-A- 2 403 228

## Description

La présente invention est relative à un dispositif permettant d'obtenir deux vitesses additionnelles synchronisées sur une boîte de vitesses mécanique de base, et il s'applique plus particulièrement aux boîtes de vitesses des véhicules automobiles de tourisme ayant un arbre primaire dont les pignons engrènent avec ceux d'un arbre secondaire parallèle à l'arbre primaire.

On connaît des boîtes de vitesses à un grand nombre de rapports de marche-avant, qui font appel à une structure spécifique complète. Ce type de boîte de vitesses présente l'inconvénient de nécessiter des investissements propres, et des pièces composantes particulières, qui sont différentes d'une boîte de vitesses mécanique classique à quatre rapports.

Le document EP-A-0 057 113 décrit un dispositif pour ce type de boîtes permettant d'obtenir une vitesse supplémentaire au moyen d'une pignonerie additionnelle montée sur les extrémités modifiées de chacun des arbres.

Le but de la présente invention est de proposer un dispositif de deux vitesses additionnelles synchronisées sur une boîte de vitesses mécanique classique, de manière à conserver tous les éléments de la boîte de vitesses mécanique de base.

Selon un mode de réalisation de l'invention, le dispositif permettant d'obtenir deux vitesses additionnelles synchronisées sur une boîte de vitesses mécanique comporte :
- un ensemble monté sur l'extrémité de l'arbre primaire de ladite boîte de vitesses,
- un ensemble monté sur l'extrémité de l'arbre secondaire, les pignons de ces deux ensembles engrenant pour obtenir lesdites deux vitesses additionnelles,

chacun de ces ensembles étant supporté à son extrémité par un roulement, qui est disposé dans un carter spécifique. Ce carter spécifique vient se monter sur le carter de la boîte de vitesses mécanique de base. Les extrémités des arbres primaire et secondaire sont celles de la boîte de vitesses mécanique de base sans aucune modification.

Selon un mode de réalisation de l'invention, l'ensemble monté sur l'extrémité de l'arbre primaire consiste en un fourreau qui s'engage sur ladite extrémité, et qui supporte chacun des pignons fous des deux vitesses additionnelles, avec l'ensemble du synchroniseur. Ce fourreau vient s'appuyer sur le roulement de boîte de vitesses par l'intermédiaire d'une rondelle de maintien du pignon correspondant, et il est muni d'une collerette de maintien de l'autre pignon. L'ensemble monté sur l'extrémité de l'arbre secondaire consiste en un pignon double monobloc, qui vient s'engager sur son extrémité.

Un système de calage est prévu sur chacun des ensembles des arbres primaire et secondaire. Pour l'arbre primaire, il consiste en une cale qui est disposée entre la collerette du fourreau et le roulement monté sur le carter spécifique. Pour l'arbre secondaire, il consiste en une cale interne qui est munie d'une rondelle élastique.

Selon une variante de l'invention, une goulotte de lubrification est aménagée sur l'axe primaire, et est alimentée par un circuit interne de la boîte de vitesses. Cette goulotte est constituée par un tube avec une embase, qui vient se monter entre la bague extérieure du roulement, et le fond du carter spécifique. Le tube est muni d'un trou d'alimentation, qui coopère avec des trous radiaux d'amenée d'huile qui sont aménagés entre les rangées d'aiguilles de chacun des pignons fous dans le fourreau.

Selon un mode de réalisation de l'invention, l'ensemble monté sur l'arbre secondaire, a son pignon double monobloc qui est bloqué sur l'extrémité dudit arbre secondaire au moyen d'une vis. La tête de cette vis vient s'appuyer sur le fond d'une coupelle, qui a une collerette qui s'applique sur l'extrémité dudit pignon double. Cette vis se monte dans le trou taraudé de l'arbre secondaire de la boîte de vitesses de base.

Le dispositif de deux vitesses additionnelles synchronisées, selon l'invention, présente ainsi l'avantage d'offrir deux vitesses supplémentaires sur une boîte de vitesses mécanique de base, en conservant intégralement cette boîte de vitesses mécanique qui est généralement fabriquée en très grande série dans l'industrie automobile. On a ainsi un système très souple de deux vitesses additionnelles, qui fait appel à un minimum de pièces supplémentaires avec un coût réduit et des investissements relativement très faibles.

D'autres caractéristiques et avantages de la présente invention ressortiront de la description qui suit le mode de réalisation donné à titre d'exemple, en référence aux dessins annexés, sur lesquels :
- la figure 1 représente en coupe axiale l'ensemble du dispositif de deux vitesses additionnelles synchronisées selon l'invention;
- la figure 2 représente en coupe axiale un autre mode de réalisation de l'invention.

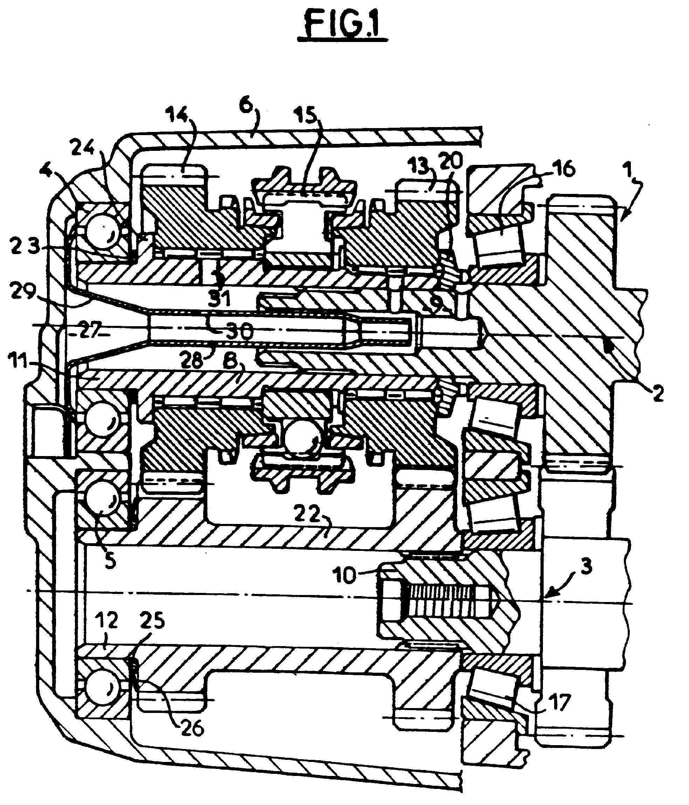

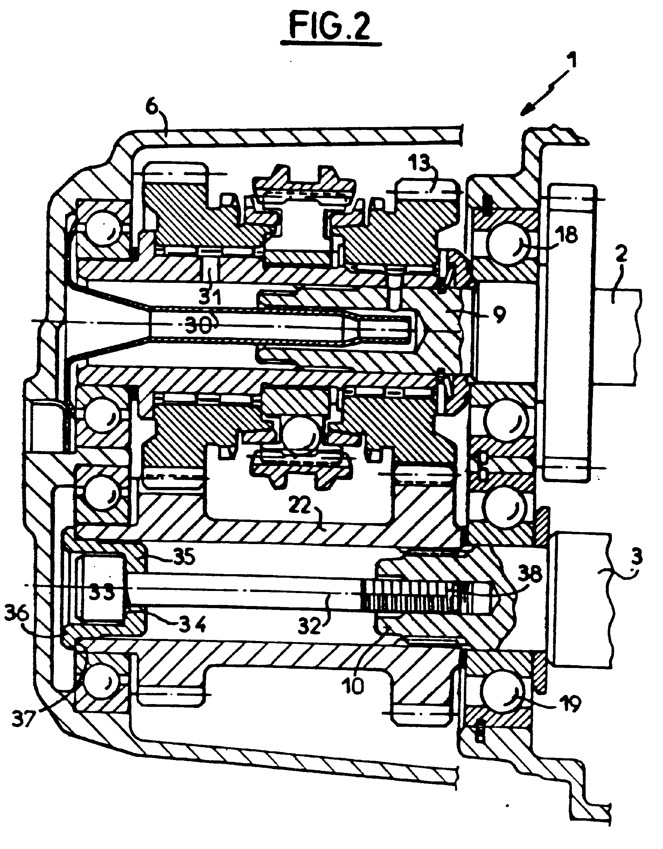

Le dispositif de deux vitesses additionnelles synchronisées, selon l'invention, qui est représenté sur les figures 1 et 2, s'adapte sur une boîte de vitesses mécanique 1, qui est classique. Ce dispositif comporte essentiellement :
- un ensemble monté sur l'extrémité 9 de l'arbre primaire 2 de la boîte de vitesses 1,
- un ensemble monté sur l'extrémité 10 de l'arbre secondaire 3 de la boîte de vitesses 1.

Chacun de ces ensembles est supporté à ses extrémités respectives 11 et 12 par un roulement correspondant 4 et 5, qui est disposé dans un carter spécifique 6. Ce carter spécifique 6 vient à son tour se monter sur le carter de la boîte de vitesses mécanique de base. De plus, les extrémités 9 et 10 des arbres primaire 2 et secondaire 3 correspondants sont celles de la boîte de vitesses mécanique 1 sans aucune modification.

Comme on peut le voir sur les figures 1 et 2, l'ensemble monté sur l'extrémité 9 de l'arbre primaire 2 comporte un fourreau 8, qui s'engage sur l'extrémité 9 de l'arbre primaire 2. Ce fourreau 8 supporte chacun des pignons fous 13 et 14 des deux vitesses additionnelles correspondantes, avec l'ensemble du synchroniseur 15. Ce fourreau 8 vient s'appuyer sur le roulement 16 de boîte de vitesses par l'intermédiaire d'une rondelle 20 de maintien du pignon fou 13. De plus, ce fourreau 8 comporte de l'autre côté une collerette de maintien 24 qui vient s'appuyer sur l'autre pignon fou 14.

L'ensemble monté sur l'extrémité 10 de l'arbre secondaire 3 comporte un pignon double monobloc 22, qui vient s'engager sur l'extrémité 10 de l'arbre secondaire 3. Ces deux ensembles sont solidarisés en rotation avec chacune des extrémités correspondantes des arbres primaire 2 et secondaire 3, au moyen de cannelures aménagées dans le fourreau 8 et dans le pignon monobloc 22. Ces cannelures coopèrent avec les cannelures qui existent sur les extrémités 9 et 10 de l'arbre primaire 2 et de l'arbre secondaire 3.

De plus, il existe un système de calage sur chacun des arbres primaire et secondaire. Sur l'arbre primaire, une cale 23 est disposée entre la collerette 24 du fourreau 8 et le roulement 4 qui est monté sur le carter spécifique 6. Pour l'arbre secondaire 3, le calage consiste en une cale interne 25 qui est munie d'une rondelle élastique 26, et qui est disposée entre le roulement 5 monté sur le carter 6, et le pignon double monobloc 22.

La cale interne 25 limite le jeu axial, tandis que la rondelle élastique 26 assure la contrainte axiale de la bague intérieure du roulement correspondant 5.

Une goulotte de lubrification 27 est aménagée sur l'axe primaire 2. Cette goulotte de lubrification 27 est alimentée par un circuit interne de la boîte de vitesses mécanique de base. La goulotte 27 est constituée par un tube 28 avec une embase 29 qui vient se monter entre la bague externe du roulement 4, et le fond du carter spécifique 6. Le tube 28 est muni de trous d'alimentation 30, qui coopèrent avec des trous radiaux 31 d'amenée d'huile, qui sont aménagés entre les rangées d'aiguilles de chacun des pignons fous dans le fourreau 8.

Le premier mode de réalisation de l'invention qui est représenté selon la figure 1, s'applique à des boîtes de vitesses mécaniques de base à couple élevé. Ces boîtes de vitesses sont montées sur des roulements à rouleaux coniques 16 et 17.

Le mode de réalisation représenté sur la figure 2 s'applique à des boîtes de vitesses mécaniques à couple faible. Ces boîtes mécaniques sont montées sur des roulements à billes 18 et 19.

Dans ce dernier cas, l'ensemble monté sur l'arbre secondaire 3 a son pignon double monobloc 22, qui est bloqué sur l'extrémité 10 dudit arbre secondaire 3 au moyen d'une vis 32. Cette vis 32 a une tête 23 qui vient s'appuyer sur le fond 34 d'une coupelle 35, qui a une collerette 36. Cette collerette 36 s'applique sur l'extrémité 37 du pignon double monobloc 22, ladite vis 32 se montant dans le trou taraudé 38 de l'arbre secondaire 3 de la boîte de vitesses mécanique de base.

## Revendications

1. Dispositif permettant d'obtenir deux vitesses additionnelles synchronisées sur une boîte de vitesses mécanique (1) de base ayant un arbre primaire (2) dont les pignons engrènent avec ceux d'un arbre secondaire (3) parallèle à l'arbre primaire, ledit dispositif comportant :
- un ensemble monté sur l'extrémité (9) de l'arbre primaire (2) de la boîte de vitesses,
- un ensemble monté sur l'extrémité (10) de l'arbre secondaire (3), les pignons de ces deux ensembles engrenant pour obtenir lesdites deux vitesses additionnelles,
chacun de ces ensembles étant supporté à son extrémité respective (11) et (12) par un roulement (4) et (5) qui est disposé dans un carter (6) spécifique, qui vient se monter sur le carter de la boîte de vitesses mécanique de base; les extrémités (9) et (10) des arbres primaire (2) et secondaire (3) étant celles de la boîte de vitesses mécanique de base (1) sans aucune modification.

2. Dispositif de deux vitesses additionnelles selon la revendication 1, caractérisé en ce que :
- l'ensemble monté sur l'extrémité (9) de l'arbre primaire (2) consiste en un fourreau (8), qui s'engage sur l'extrémité (9) de l'arbre primaire (2), et qui supporte chacun des pignons fous (13) et (14) des deux vitesses additionnelles, avec l'ensemble du synchroniseur (15); ledit fourreau (8) venant s'appuyer sur un roulement (16) de la boîte de vitesses de base par l'intermédiaire d'une rondelle (20) de maintien du pignon (13), et ayant du côté de l'autre pignon fou (14) une collerette de maintien (24);
- l'ensemble monté sur l'extrémité (10) de l'arbre secondaire (3) consiste en un pignon double monobloc (22), qui vient s'engager sur l'extrémité (10) de l'arbre secondaire (3).

3. Dispositif de deux vitesses additionnelles selon la revendication 2, caractérisé en ce que l'ensemble monté sur l'extrémité (9) de l'arbre primaire (2) comporte une cale (23) qui est disposée entre la collerette (24) et le roulement (4) monté sur le carter spécifique (6).

4. Dispositif de deux vitesses additionnelles selon la revendication 2, caractérisé en ce que l'ensemble monté sur l'extrémité (10) de l'arbre secondaire (3) a un calage qui consiste en une cale interne (25), qui est munie d'une rondelle élastique (26).

5. Dispositif de deux vitesses additionnelles selon la revendication 2, caractérisé en ce qu'une goulotte de lubrification (27) est alimentée par un circuit interne de la boîte de vitesses mécanique, et qu'elle est constituée par un tube (28) avec une embase (29), qui vient se monter entre la bague extérieure du roulement (4) et le fond du carter spécifique (6), le tube (28) étant muni de trous d'alimentation (30), qui coopèrent avec des trous radiaux (31) d'amenée d'huile aménagés entre les rangées d'aiguilles de chacun des pignons fous dans le fourreau (8).

6. Dispositif de deux vitesses additionnelles selon la revendication 2, caractérisé en ce que le système de l'arbre secondaire (3) a son pignon double monobloc (22), qui est bloqué sur l'extrémité (10) dudit arbre secondaire (3) au moyen d'une vis (32), dont la tête (33) vient s'appuyer sur le fond (34) d'une coupelle (35) qui a une collerette (36), qui s'applique sur l'extrémité (37) du pignon double monobloc (22), ladite vis (32) se montant dans le trou taraudé (38) de l'arbre secondaire (3).

## Claims

1. A device which makes it possible to obtain two additional synchronised gears on a basic mechanical gearbox (1) having a primary shaft (2) the pinions of which mesh with those of a secondary shaft (3) parallel with the primary shaft, the said device comprising:
- an assembly mounted on the end (9) of the primary shaft (2) of the gearbox,
- an assembly mounted on the end (10) of the secondary shaft (13), the pinions of these two assemblies meshing in order to obtain the said two additional gears,
each of these assemblies being supported at its respective end (11) and (12) by a rolling bearing (4) and (5) disposed in a specific casing (6) which is mounted on the casing of the basic mechanical gearbox; the ends (9) and (10) of the primary shaft (2) and secondary shaft (3) being those of the basic mechanical gearbox (1) with no modification.

2. A device for two additional gears according to Claim 1, characterised in that:
- the assembly mounted on the end (9) of the primary shaft (2) consists of a sleeve (8) which engages over the end (9) of the primary shaft (2) and which supports each of the idling pinions (13) and (14) of the two additional gears with the assembly of the synchroniser (15); the said sleeve (8) bearing on a rolling bearing (16) of the basic gearbox through a washer (20) for maintaining the pinion (13) and having a maintaining collar (24) on the side of the other idling pinion (14);
- the assembly mounted on the end (10) of the secondary shaft (3) consists of a double monobloc pinion (22) which engages the end (10) of the secondary shaft (3).

3. A device for two additional gears in accordance with Claim 2, characterised in that the assembly mounted on the end (9) of the primary shaft (2) comprises a key (23) disposed between the collar (24) and the rolling bearing (4) mounted on the specific casing (6).

4. A device for two additional gears according to Claim 2, characterised in that the assembly mounted on the end (10) of the secondary shaft (3) has a keying which consists of an inner key (25) provided with a flexible washer (26).

5. A device for two additional gears according to Claim 2, characterised in that a lubricating channel (27) is supplied by an inner circuit from the mechanical gearbox and in that it is constituted by a tube (28) with a base (29) which is fitted between the outer ring of the rolling bearing (4) and the bottom of the specific casing (6), the tube (28) being provided with supply holes (30) which cooperate with radial holes (31) for the supply of oil and disposed between the rows of teeth of each of the idling pinions in the sleeve (8).

6. A device for two additional gears according to Claim 2, characterised in that the secondary shaft (3) system has its double monobloc pinion (22) which is locked on the end (10) of the said secondary shaft (3) by means of a screw (32), the head (33) of which bears on the bottom (34) of a cup (35) which has a collar (36) which is applied on the end (37) of the double monobloc pinion (22), the said screw (37) rising in the screw-threaded bore (38) in the secondary shaft (3).

## Patentansprüche

1. Vorrichtung, welche die Schaffung zweier zusätzlicher synchronisierter Gänge für ein Grund-Schaltgetriebe (1) ermöglicht, das eine Antriebswelle 2 aufweist, deren Ritzel in diejenigen einer Hauptwelle (3) eingreifen, die parallel zur Antriebswelle ist und die aufweist:
- eine Anordnung, die am Ende (9) der Antriebswelle (2) des Getriebes befestigt ist,
- eine Anordnung, die am Ende (10) der Hauptwelle (3) befestigt ist, wobei die Ritzel der beiden Anordnungen ineinandergreifen, um so die beiden zusätzlichen Gänge zu schaffen und wobei
jedes entsprechende Ende (11 und 12) dieser Anordnungen von einem Lager (4 und 5) getragen wird, das in dem besonderen Gehäuse (6) angeordnet ist, welches wiederum am Gehäuse des Grund-Schaltgetriebes angeordnet ist; die Enden (9 und 10) der Antriebswelle (2) und der Hauptwelle (3) sind diejenigen des unveränderten Grund-Schaltgetriebes (1).

2. Vorrichtung mit zwei zusätzlichen Gängen nach Anspruch 1, dadurch gekennzeichnet, daß
- die am Ende (9) der Antriebswelle (2) befestigte Anordnung aus einer Buchse (8) besteht, die in das Ende (9) der Antriebswelle (2) eingreift und die die beiden beweglichen Ritzel (13 und 14) der beiden zusätzlichen Gänge trägt, zusammen mit der Synchronisationsanordnung (15); dabei stützt sich die Buchse (8) auf einem Lager (16) des Grund-Schaltgetriebes über eine Unterlegscheibe (20) zur Halterung des Ritzels (13) ab und weist auf der dem anderen beweglichen Ritzel (14) zugewandten Seite einen Halteflansch (24) auf;
- die am Ende (10) der Hauptwelle (3) befestigte Anordnung aus einem einstückigen Doppelritzel besteht, das in das Ende (10) der Hauptwelle (3) eingreift.

3. Vorrichtung mit zwei zusätzlichen Gängen nach Anspruch 2, dadurch gekennzeichnet, daß die am Ende (9) der Antriebswelle (2) befestigte Anordnung einen Keil (23) aufweist, der zwischen dem Flansch (24) und dem Lager (4) am besonderen Gehäuse (6) angeordnet ist.

4. Vorrichtung mit zwei zusätzlichen Gängen nach Anspruch 2, dadurch gekennzeichnet, daß die am Ende (10) der Hauptwelle (3) befestigte Anordnung eine Klemmeinrichtung aufweist, die aus einem Innenkeil (25) besteht, welcher mit einer elastischen Unterlegscheibe (26) versehen ist.

5. Vorrichtung mit zwei zusätzlichen Gängen nach Anspruch 2, dadurch gekennzeichnet, daß eine Schmiertülle (27) von einem inneren Kreis des Schaltgetriebes gespeist wird und daß sie aus einem Rohr (28) mit Ansatzstück (29) besteht, das zwischen dem Außenring des Lagers (4) und dem Boden des besonderen Gehäuses (6) vorgesehen ist, wobei das Rohr (28) mit Versorgungsöffnungen (30) versehen ist, welche mit Radialöffnungen (31) zur Ölzufuhr zusammenwirken, die zwischen den Nadelreihen der einzelnen beweglichen Ritzel in der Buchse (8) vorgesehen sind.

6. Vorrichtung mit zwei zusätzlichen Gängen nach Anspruch 2, dadurch gekennzeichnet, daß das System der Hauptwelle (3) ein einstückiges Doppelritzel (22) aufweist, welches am Ende (10) der Hauptwelle (3) mittels einer Schraube (32) blockiert ist, deren Kopf (33) sich auf dem Boden (34) einer Kappe (35) abstützt, welche einen Flansch (36) aufweist, der sich auf dem Ende (37) des einstückigen Doppelritzels (22) abstützt, wobei die Schraube (32) in eine Gewindeöffnung (38) in der Hauptwelle (3) eingreift.
